# EUROPÄISCHE PATENTSCHRIFT

(11) **EP 0 961 743 B1**
(45) Veröffentlichungstag und Bekanntmachung des Hinweises auf die Patenterteilung: **16.04.2003**
(21) Anmeldenummer: 97933670.8
(22) Anmeldetag: 03.07.1997
(51) Int. Cl.: B65G 1/04

(54) **SPURGEFÜHRTES TRANSPORTSYSTEM MIT TRANSPORTFAHRZEUGEN**
RAIL-GUIDED TRANSPORT SYSTEM WITH TRANSPORT VEHICLES
SYSTEME DE TRANSPORT AVEC VEHICULES DE TRANSPORT GUIDES PAR RAILS

(30) Priorität: 04.07.1996 DE 19626966
(43) Veröffentlichungstag der Anmeldung: 08.12.1999
(73) Patentinhaber: ALCATEL, 75008 Paris (FR)
(72) Erfinder: SAUERWEIN, Richard, D-85635 Höhenkirchen (DE); ZORN, Michael, D-65618 Selters (DE)
(74) Vertreter: Dreiss, Fuhlendorf, Steimle & Becker
(86) Internationale Anmeldenummer: EP9703737
(87) Internationale Veröffentlichungsnummer: WO98001377

(56) Entgegenhaltungen:
- EP-A- 0 770 565
- WO-A-92/17929
- DE-U- 9 107 229
- FR-A- 2 445 289
- US-A- 3 817 406
- US-A- 4 971 508

## Beschreibung

Die Erfindung bezieht sich auf ein spurgeführtes Transportsystem mit wenigstens einer Fahrstrecke aus Trag- und Spurführungselementen, auf der wenigstens ein Transportfahrzeug für Güter geführt ist, das Mittel zum Fortbewegen längs der Fahrstrecke hat und auf das Energie von einem längs der Fahrstrecke verlegten Primärkreis berührungslos übertragen wird.

Es ist bereits bekannt, Energie auf ein Fahrzeug berührungslos zu übertragen. In der Zeitschrift Elektric 34, 1980, H. 7, ist eine Anordnung zur induktiven Energieübertragung auf eine Grubenlokomotive beschrieben. Diese Anordnung enthält Doppelleitungen, die an der Decke von Grubenstollen verlegt sind. Zwischen der Doppelleitung werden Ferritkörper mit Sekundärwicklungen bewegt, die mit der Grubenlokomotive verbunden sind und den Antrieben und weiteren Verbrauchern Energie zuführen.

Bekannt ist auch eine Vorrichtung zur berührungslosen Energieübertragung auf ein spurgeführtes Fahrzeug (PCT-GB 92/00220). Eine Doppelleitung ist auf elektrisch nichtleitenden Stützen befestigt. Längs der Doppelleitung ist ein auf einem Fahrzeug angebrachter Ferritkern bewegbar, der eine Sekundärwicklung trägt, über Energie in das Fahrzeug eingespeist wird. Die Doppelleitung wird von einer Wechselspannung im KHz-Bereich beaufschlagt

Bekannt sind auch Hochregallager zum Stapeln von Gütern bzw. Paletten mit Gutern. Zum Füllen und Leeren von Regalen mit den Gütern bzw Paletten sind Hubförderer vorgesehen, die den Weg zwischen einer Aufnahme- und Abgabestelle und den Regalen zurücklegen. Siehe als Beispiel die Dokumente US-A-4 971 508 und FR-A-2 445 289.

Der Erfindung liegt das Problem zugrunde, ein spurgeführtes Transportsystem zu entwickeln, dem Transportaufträge auf einfache Weise aufgetragen werden können und das auch in der Lage ist, schnell Transportaufträge auch an weit von einander entfernten Be- und Entladungsstellen auszuführen.

Die Aufgabe wird bei einem Transportsystem der eingangs beschriebenen Art erfindungsgemäß dadurch gelöst, daß das Transportfahrzeug als Träger-Fahrzeug für wenigstens ein Satellitenfahrzeug zum Gütertransport ausgebildet ist und einen Satelliten-Fahrstreckenabschnitt für die Positionierung und das Parken des Satellitenfahrzeugs aufweist, daß der Fahrstreckenabschnitt durch Positionierung des Trägerfahrzeugs auf längs dessen Fahrstrecke quer zu dieser angeordnete Satellitenfahrstrecken fluchtend ausrichtbar ist, daß auf das mit Mitteln zum Fortbewegen ausgestattete Satellitenfahrzeugs Energie von einem längs der Satellitenfahrstrecken verlegten Primärkreis berührungslos übertragen wird und daß das wenigstens eine Satellitenfahrzeug und das Trägerfahrzeug Prozessorkapazität und Mittel zu drahtlosen Nachrichtenübertragung untereinander und/oder zu einer zentralen Steuereinheit aufweisen. Mit dem erfindungsgemäßen Transportsystem können Transportaufträge sehr flexibel ausgeführt werden. Auch dann, wenn das Trägerfahrzeug nur einen Satellitenfahrstreckenabschnitt hat, kann das Trägerfahrzeug mit mehreren Satellitenfahrzeugen zusammenarbeiten, indem beispielsweise ein Satellitenfahrzeug zu einer Satellitenfahrstrecke transportiert wird, während andere Satellitenfahrzeuge auf Satellitenfahrstrecken Transportaufgaben ausführen oder mit Gütern in Wartestellung stehen, bis das Trägerfahrzeug sein Satellitenfahrzeug mit dessen Gütern zu einem ausgewählten Fahrstreckenabschnitt gebracht hat und anschließend sofort an den Fahrstreckenabschnitt des anderen Satellitenfahrzeugs fährt, um dieses aufzunehmen und an einen neuen Bestimmungsort zu transportieren. Die zurückzulegende Strecke bzw. die anzufahrenden Ziel- Fahrstreckenabschnitte werden durch ein entsprechendes Transportprogramm ausgewählt, dessen Zieldaten von der Zentrale ausgehen, die z.B. als Eingabebaugruppe ausgebildet ist. Ein wesentlicher Vorteil des erfindungsgemäßen Systems ist demnach darin zu sehen, daß das Trägerfahrzeug nicht in einer Warteposition verharren muß, wenn das Satellitenfahrzeug eine Transportaufgabe für Güter ausführt. Dies wirkt sich in einer erheblichen Erhöhung der Beförderungsleistung gegenüber einem System aus, bei dem ein Trägerfahrzeug auf einen Satelliten warten muß, bis dieser zu einer Güteraufnahme- oder Güterabladestelle gefahren ist und danach wieder seine Position auf dem Tragerfahrzeug eingenommen hat.

Bei einer bevorzugten Ausführungsform sind wenigstens zwei Fahrstrecken für das Trägerfahrzeug in zwei Ebenen übereinander mit entsprechenden quer zu diesen verlaufenden Satellitenfahrstrecken und ein Aufzug für das Trägerfahrzeug an wenigstens einem Ende der Fahrstrecke vorgesehen.

Mit dieser Vorrichtung können die Transportleistungen und die Speicherkapazität für Güter wesentlich gesteigert werden, da das Trägerfahrzeug und Satellitenfahrzeuge unter Steuerung der Nachrichtenverbindung in verschiedenen Ebenen aktiv sein können. Unter Aktivität ist hierbei auch die Wartestellung des Trägerfahrzeugs oder Satellitenfahrzeugs an einer Aufnahme- oder Abgabestelle zu verstehen.

Zweckmäßigerweise ist das wenigstens eine Satellitenfahrzeug für die Aufnahme, den Transport und das Abstellen von Paletten ausgebildet. Eine solche Ausführungsform eignet sich insbesondere für Regallager, z.B. Hochregallager.

Die Energie auf das Trägerfahrzeug und auf das bzw. die Satellitenfahrzeuge wird insbesondere bei Mittelfrequenz induktiv übertragen. Daher ist es günstig, eine Übertragungsvorrichtung zu wählen, die auch bei großen Fahrstreckenlangen eine niedrige Induktivität hat. Eine solche Anordnung umfaßt zweckmäßigerweise einen als langgestreckte Leiteranordnung ausgebildeten ruhenden Primärkreis, der an die Mittelfrequenzquelle angeschlossen ist und längs der Fahrstrecke des Trägerfahrzeugs sowie des Satellitenfahrzeugs auch auf dem Trägerfahrzeug angeordnet ist und je einen am Trägerfahrzeug und am Satellitenfahrzeug angeordneten Ferritkern-Übertragerkopf sowie je einer den Ferritkern im Übertragerkopf umfassenden Sekundärwicklung besteht, die mit dem Primärkreis induktiv gekoppelt ist. Dabei enthält die Leiteranordnung des Primärkreises einen als fast geschlossenes Gehäuse, ausgebildeten Außenleiter und einen etwa im Zentrum des Gehäuses liegenden Mittelleiter, in dem ein entgegengesetzt gerichteter Strom von gleicher Größe fließt, wobei der Mittelleiter vom U-förmigen Ferritkern umfaßt wird. Mit dieser Vorrichtung können für den Transport von Lasten Leistungen über Luftspalte im cm-Bereich bei relativ geringem Aufwand und gutem Wirkungsgrad übertragen werden, wobei geringe Eigeninduktivitäten vorhanden sind. Der Strom verteilt sich auf zwei Außenwände, wodurch trotz des Skin-Effekts ein relativ großer Übertragungsquerschnitt verfügbar ist.

Der U-förmige Ferritkern trägt vorteilhafterweise auf beiden Schenkeln dem primärseitigen Leiter gegenüberliegende Wicklungen, deren Höhe etwa der Höhe des Primärleiters entspricht und zwischen dem 0,3fachen und 0,5fachen der Gesamthöhe des U-fömigen Kerns liegt. Die Höhe des Primärleiters im Verhälnis zur neben dem Leiterbereich liegenden Durchschnittsbreite des magnetischen Flusses wird so gewählt, daß die übertragene Leistung maximal ist.

Weiterhin ist es günstig, wenn die dem Mittelleiter gegenüberliegenden Außenwände des Gehäuses zu möglichst gleichmäßigen Verteilung des Stroms über einen möglichst breiten Stromführungsbereich eine Wölbung aufweisen. Die Querschnitte von Außenleiter und Mittelleiter und die Durchtrittsbreite des magnetischen Flusses können so gestaltet und die Größenverhältnisse so bemessen sein, daß eine minimale elektrische Verlustleistung auftritt An der Sekundärwicklung ist parallel zum Lastwiderstand ein Kondensator geschaltet, der den Magnetisierungsstrom zum Erzeugen der magnetischen Flußdichte im Luftspalt des Ferritkerns liefert. Die Sekundärwicklung ist auch mit einem Kondensator in Reihe geschaltet, der den induktiven Spannungsabfall an der Streuinduktivität des Ubertragerkopfs kompensiert Vorzugsweise werden Nachrichten drahtlos auf das Trager- und das Satellitenfahrzeug jeweils über längs den Fahrstrecken verlegte Leitungen übertragen. Eine solche kontaktlose Anordnung zur Informationsübertragung ermöglicht eine hohe Übertragungsgüte, die weitgehend frei von elektromagnetischen Störeinflüsen ist. Die Leitung ist vorzugsweise ein mit Öffnungen versehenes Koaxialkabel, das jeweils mit einer auf dem Trägerfahrzeug oder Satellitenfahrzeug angeordneten Patch-Antenne zusammenwirkt.

Die Erfindung wird im folgenden an Hand von in einer Zeichnung dargestellten Ausführungsbeispielen näher beschrieben, aus denen sich weitere Einzelheiten, Merkmale und Vorteile ergeben.

Es zeigen:
- Fig. 1: ein spurgeführtes Transportsystem schematisch in perspektivischer Ansicht,
- Fig. 2: ein Trägerfahrzeug und ein Satellitenfahrzeug des in Fig. 1 dargestellten Transportsystems schematisch von einer Seite aus, teilweise im Schnitt,
- Fig. 3: ein Satellitenfahrzeug des Transportsystems gemäß Fig. 1 schematisch von vorne im Querschnitt,
- Fig. 4: eine Vorrichtung zur berührungslosen Energieübertragung, Spurführung und Informationsübertragung
- Fig. 5: eine Vorrichtung zur kontaktlosen Energieübertragung mit einem offenen Koaxialleiter im Längsschnitt bzw. in Draufsicht.

Ein spurgeführtes Transportsystem weist wenigstens ein längs einer Fahrstrecke 1 fahrbares Transportfahrzeug auf, das als Trägerfahrzeug 2 für wenigstens ein Satellitenfahrzeug 3 ausgebildet ist. Das Satellitenfahrzeug 3 ist für die Aufnahme, den Transport und das Absetzen von Gütern 4 bestimmt. Auf dem Trägerfahrzeug 2 sind zwei Satellitenfahrstreckenabschnitte 5, 6 parallel zueinander angeordnet. Die Satellitenfahrstreckenabschnitte 5,6, die quer zu der Fahrstrecke 1 verlaufen, haben Trag- und Spurführungselemente. Auch die Fahrstrecke 1 hat Trag- und Führungselemente, die unten noch näher beschrieben werden. Sowohl das Trägerfahrzeug 2 als auch das Satellitenfahrzeug 3 sind mit Mitteln zur Spurführung bzw. Spurhaltung und zum Fortbewegen ausgestattet.

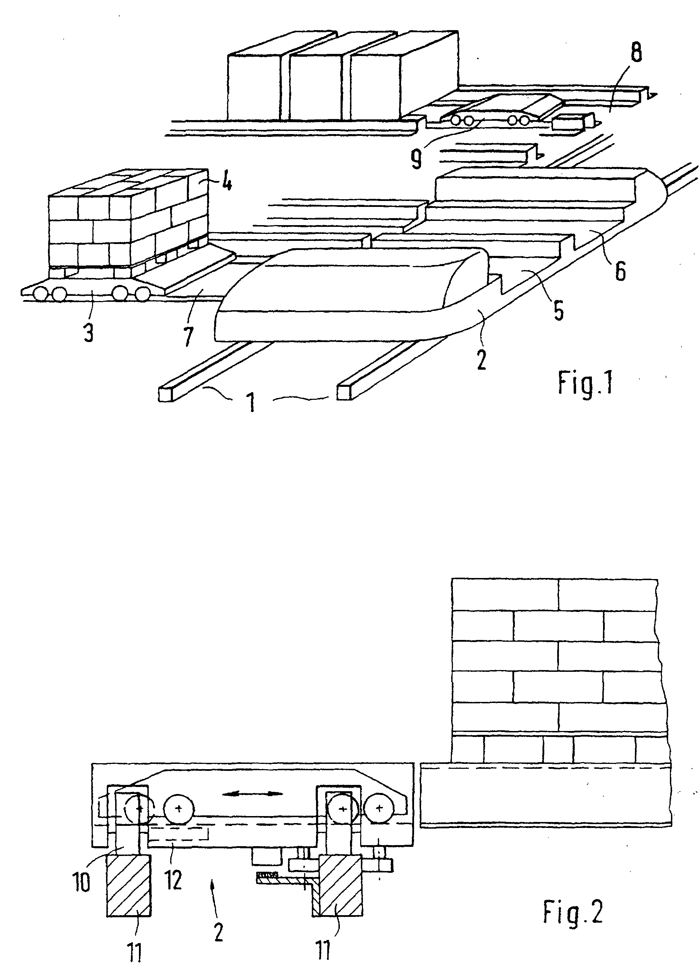

Neben der Fahrstrecke 1 sind in Höhe der Satellitenfahrstreckenabschnitte 5, 6 Satellitenfahrstrecken 7, 8 angeordnet, auf die die Fahrstreckenabschnitte 5, 6 durch entsprechende Positionierung des Trägerfahrzeugs 2 fluchtend ausgerichtet werden konnen. Die kann z.B durch Sensoren am Trägerfahrzeug 2 bzw. an den Fahrstrecken 5, 6 geschehen. Bei fluchtender Ausrichtung einer Fahrstrecke 5 bzw 6 auf die jeweilige Fahrstrecke 7, 8 kann das Satellitenfahrzeug 3 vom Trägerfahrzeug 2 auf die Fahrstrecke 7 bzw 8 überwechseln oder umgekehrt von einer Fahrstrecke 7, 8 auf das Trägerfahrzeug 2 überwechseln. In Fig. 1 sind das Satellitenfahrzeug 3 und ein weiteres Satellitenfahrzeug 9 dargestellt. Die Darstellung von zwei Satellitenfahrzeugen ist nicht beschränkend zu verstehen.

Längs der Fahrstrecke 1 und der Satellitenfahrstrecken 7, 8 sind jeweils Primärkreise verlegt, von denen aus Energie für den Betrieb des Trägerfahrzeugs 2 und der Satellitenfahrzeuge 3, 9 drahtlos übertragen wird. Auch die Fahrstreckenabschnitte 5, 6 weisen solche Primärkreisabschnitte auf, um auf die Satellitenfahrzeuge 3, 9 Energie für den Wechsel vom Trägerfahrzeug 1 auf die Fahrstrecke 7, 8 und umgekehrt zuzuführen. Sowohl das Trägerfahrzeug 2 als auch die Satellitenfahrzeuge 3, 9 sind mit Schaltungen versehen, die Prozesskapazitäten haben, um wenigstens ein Steuerprogramm aufnehmen zu können. Weiterhin sind das Trägerfahrzeug 2 und die Satellitenfahrzeuge 3, 9 je mit einer Kommunikationsschnittstelle versehen, wobei Mittel zur drahtlosen Informationsübertragung zwischen dem Trägerfahrzeug 2 und dem Satellitenfahrzeug 3, 9 und gegebenenfalls mit einer Zentralstelle vorgesehen sind.

Das Trägerfahrzeug 2 besteht aus einem Antriebsteil, welcher in einer unteren Ebene zusammen mit Spurführung und Gleitfunktion schematisch dargestellt ist. Diese untere Ebene zusammen mit der obersten Ebene, welche für die Lagerung der Satellitenfahrzeuge 3 mit ihren Gütern vorgesehen ist, bildet eine Art spurgeführten Wagen. Dieser Wagen wird durch eine Informationsebene zu einem autarken System ergänzt. Diese Informationsebene empfängt und sendet Daten von und zu den Satellitenfahrzeugen und von und zu einer Feststation, welche für den Informationsaustausch einen Sender und einen Empfänger enthält und ebenfalls Daten senden und empfangen kann. Außerdem ist im Trägerfahrzeug 2 und den Satellitenfahrzeugen je eine Datenverarbeitung vorgesehen, welche Aktoren und Sensoren bedienen kann. Dadurch ist es möglich, beispielsweise eine magnetische Spurführung und Schwerkraftkompensation mit Abstandsregelung durchzuführen. Die Regelung der Antriebe geschieht nach Maßgabe der von vorgegebenen Transportaufträgen, die z.B. von der Feststation ausgegeben werden. Außerdem wird der Abstand der einzelnen Tragerfahrzeuge durch Informationsaustausch zwischen den Fahrzeugen geregelt, so daß keine Kollisionen vorkommen können, wenn mehrere Trägerfahrzeuge sich auf der gleichen Fahrstrecke 1 bewegen. Die oberste Ebene der Lagerung und Ein- und Ausgabe ist vielseitig ausrüstbar, beispielsweise mit einem Hubelement oder einem Rollenförderer.

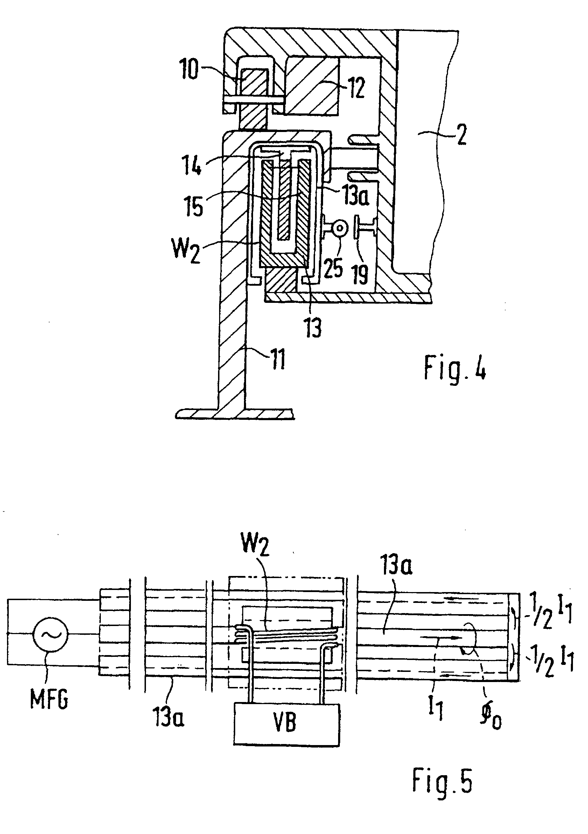

Das Trägerfahrzeug läuft beispielsweise auf Rollen 10 und auf Schienen 11 der Fahrstrecke 1, wobei der Antrieb mit Hilfe eines Motors 12 durchgeführt wird. Die Energie für den Antrieb des Motors 12 und für weitere Servoantriebe wird durch die berührungslose Energieübertragung sichergestellt. Dies ist in Fig. 4 näher dargestellt, die eine Schiene 11 zeigt, deren Oberseite die Bahn für die Rollen 10 bildet. Die Schiene 11 ist oben L-formig abgewinkelt. Der abgewinkelte Teil überdeckt einen Mittelleiter 13, der von einem Steg 14 gehalten wird, der auf der unteren Seite des abgewinkelten Abschnitts der Schiene 11 befestigt ist. Der Mittelleiter 13 wird von einem nicht näher dargestellten Mittelfrequenzgenerator gespeist. Die berührungslose Energieübertragung geschieht mittels eines Übertragerkopfs 15, der eine Wicklung W2 hat und in gleicher Weise am Trägerfahrzeug 2 und den Satellitenfahrzeugen 3, 9 befestigt ist. Der Kern des Übertragerkopfs 15 besteht aus einem Ferrit-Material. Der Mittelleiter 13, der in den Übertragerkopf 15 ragt, ist Teil einer E-förmigen Anordnung, die noch den Außenleter 13a aufweist.

Zur Informationsübertragung ist ein geschlitztes Koaxialkabel an der Schiene 25 befestigt. Das Koaxialkabel 25 ist mit einer festen Sende-, Empfangsstation verbunden. Eine am Trägerfahrzeug 2 befestigte Patch-Antenne 19 ist im Trägerfahrzeug 2 mit einer Mobilstation verbunden. Die Informationsübertragung zwischen der festen Station, dem Trägerfahrzeug 2 und den Satellitenfahrzeugen 3, 9 kann auch über Funk erfolgen.

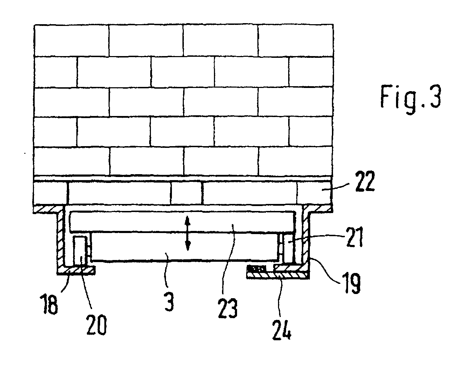

Um die Schienenhöhe zu reduzieren, kann das nach einer Seite hin E-formige Primärelement auch gegenüber der Anordnung gemäß Fig. 3 um 90° gedreht, d.h. waagrecht, angeordnet sein. In Fig. 4 ist das Prinzip der zu einer Seite hin ofenen koaxialleiterähnlichen Anordnung zur Energieübertragung näher dargestellt.

Im Übertragerkopf 15 umfaßt der U-förmige Ferritkern den Mittelleiter 13 und leitet den magnetischen Fluß Ø durch die Sekundärwicklung W₂. Der Mittelleiter 13 wird an einem Ende über einen Mittelfrequenzgenerator gespeist, so daß er den Strom I₁ führt. Er ist an dem von der Speisequelle entfernten Ende E mit dem Gehäuse verbunden. Der Strom teilt sich hier wegen der Symmetrie der Anordnung in zwei gleichgroße Teilströme I_{1/2} und fließt über das Gehäuse zu dem Mittelfrequenzgenerator MFG zurück.

Infolge der bei hohen Frequenzen in massiven Leitern wie dem U-förmigen Gehäuse (beispielsweise aus Aluminium) auftretende Stromverdrängung, häufig auch als Skineffekt bezeichnet, verteilt sich der Strom nicht gleichmäßig in den Gehäusewandungen, sondern dringt von Innen her nur der Eindringtiefe δ_{E} entsprechend in die Gehäusewandungen ein. Die Eindringtiefe beträgt bei 25 kHz und Aluminium etwa 0,5 mm. Der Strom verteilt sich auch nicht gleichmäßig über den inneren Umfang des U-Profils, sondern fließt vorwiegend an den Stellen der größten magnetischen Feldstärken.

Die Fig. 3 zeigt schematisch ein Satellitenfahrzeug 3 bzw. 9 von vorne. Die kontaktlose Energieübertragung, wie sie in Fig. 4 und 5 näher erlautert ist, wird von der Unterseite in das Satellitenfahrzeug 3 eingespeist. Die Fahrstecken 3, 8 enthalten jeweils Schienen 18, 19 auf denen die Räder 20, 21 der Satellitenfahrzeuge 3, 9 rollen. Die Schienen 18, 19 sind auf nicht näher dargestellten Trägern im Abstand vom Boden angeordnet und haben Z-Profile, da sie zugleich als Ablageflächen für Paletten 22 ausgebildet sind, die'von Hebebühnen 23 der Satellitenfahrzeuge 3, 9 getragen werden. Die Räder 20, 21 stützen sich auf den unteren abgewinkelten Enden der Z-Profile ab, deren obere abgewinkelte Enden der Schienenaußenseite zugewandt sind. Auf der Unterseite der Schiene 19 ist ein Träger 24 befestigt, auf dem der E-formige Primärkreis mit dem Mittelleiter 13 und dem Außenleiter 14 angebracht ist. In den Primärkreis ragt ein von der Unterseite des Satelliteenfahrzeugs 3, 9 ausgehender Übertragerkopf, der nicht näher dargestellt ist. Die Vorrichtung zur Energieübertragung entspricht prinzipiell im Aufbau derjenigen, die in Fig. 4 und 5 dargestellt ist.

Die Satellitenfahrzeuge können gleichzeitig mit dem Trägerfahrzeug 2 Transportaufträge ausführen, d.h. Satellitenfahrzeuge können auf Fahrstrecken 3, 8 Güter transportieren, während das Trägerfahrzeug 2 bereits Satellitenfahrzeuge zu anderen Fahrstrecken bewegt. Mit einer Hebeeinrichtung kann die in den Fig. 1-3 dargestellte Vorrichtung in mehreren Ebenen angeordnet sein. Daher eignet sich das System insbesondere für Hochregallager. Die Satellitenfahrzeuge können in diesem Falle über die Hubeinrichtung in mehreren Ebenen aktiv sein, d.h. Lasten bzw. Güter von einer Ebene zu einer anderen Ebene mit Hilfe von Trägerfahrzeugen befördern. Je nach Arbeitsanfall können mehrere Satelliten auf einem Trägerfahrzeug 2 arbeiten. Das System ermöglicht ein schnelles Umschlagen von Paletten von einer Ablagestelle zu einer anderen Abladestelle. Darüberhinaus ist eine hohe Geschwindigkeit der Fahrzeuge möglich, weil keine Behinderungen durch Kabel kommen.

## Patentansprüche

1. Spurgeführtes Transportsystem mit wenigstens einer Fahrstrecke aus Trag- und Spurführungselementen, auf der wenigstens ein Transportfahrzeug geführt ist, das Mittel zum selbsttätigen Fortbewegen längs der Fahrstrecke hat und auf das Energie von einem längs der Fahrstrecke verlegten Primärkreis berührungslos übertragen wird,
**dadurch gekennzeichnet,**
**daß** das Transportfahrzeug als Trägerfahrzeug (2) für wenigstens ein Satellitenfahrzeug (3, 9) zum Gütertransport ausgebildet ist und einen Satellitenfahrstreckenabschnitt für die Positionierung und das Parken des Satellitenfahrzeugs (3, 9) aufweist, daß der Satellitenfahrstreckenabschnitt durch Positionierung des Trägerfahrzeugs (2) auf längs dessen Fahrstrecke quer zu dieser angeordnete Satellitenfahrstrecken fluchtend ausrichtbar ist, daß auf das mit Mitteln zum selbsttätigen Fortbewegen ausgestattete Satellitenfahrzeug (3, 9) Energie von einem längs der Satellitenfahrstrecken (7, 8) verlegten Primärkreis berührungslos übertragen wird und daß das wenigstens eine Satellitenfahrzeug (3, 9) und das Trägerfahrzeug (2) Prozessorkapazität und Mittel zur drahtlosen Informationsübertragung untereinander und/oder mit einer Zentraleinheit aufweisen.

2. Transportsystem nach Anspruch 1,
**dadurch gekennzeichnet,**
**daß** wenigstens zwei Fahrstrecken für das Trägerfahrzeug in zwei Ebenen übereinander mit entsprechenden quer zu diesen verlaufenden Satellitenfahrstrecken und ein Aufzug an wenigstens einem Ende der Fahrstrecken vorgesehen ist.

3. Transportsystem nach Anspruch 1 oder 2,
**dadurch gekennzeichnet,**
**daß** das wenigstens eine Satellitenfahrzeug für die Aufnahme den Transport und das Abstellen von Paletten ausgebildet ist.

4. Transportsystem nach einem oder mehreren der vorhergehenden Ansprüche,
**dadurch gekennzeichnet,**
**daß** die Energie vom Primärkreis auf das Trägerfahrzeug (2) und die Satellitenfahrzeuge (3, 9) elektromagnetisch mit Mittelfrequenz übertragen wird.

5. Transportsystem nach einem oder mehreren der vorhergehenden Ansprüche,
**dadurch gekennzeichnet,**
**daß** der Primärkreis jeweils als langgestreckte Leiteranordnung ausgebildet und an die Mittelfrequenzquelle angeschlossen ist sowie jeweils längs der Fahrstrecke (1) des Trägerfahrzeugs (2) und längs der Satellitenfahrstrecken (7, 8) angeordnet ist, daß am Trägerfahrzeug (2) und an den Satellitenfahrzeugen (3, 9) je ein Ferritkern-Übertragerkopf (15) sowie eine den Ferritkern umfassende Sekundärwicklung vorgesehen ist, die mit dem Primärkreis induktiv gekoppelt ist.

## Claims

1. Rail-guided transport system having at least one track comprising supporting and rail-guidance elements, on which track at least one transport vehicle is guided, which vehicle has means for automatic movement longitudinally of the track and to which vehicle energy is transmitted without contact from a primary circuit laid longitudinally of the track, **characterised in that** the transport vehicle is designed as a carrier vehicle (2) for at least one satellite vehicle (3, 9) for transporting goods and has a satellite track section for the positioning and parking of the satellite vehicle (3, 9), **in that** by positioning the carrier vehicle (2) the satellite track section can be lined up to align with satellite tracks which are arranged longitudinally of the carrier vehicle's (2) track and transversely thereto, **in that** energy is transmitted without contact to the satellite vehicle (3, 9), which is fitted with means for automatic movement, from a primary circuit laid longitudinally of the satellite tracks (7, 8), and **in that** at least one satellite vehicle (3, 9) and the carrier vehicle (2) have processor capacity and means for the wireless transmission of information between one another and/or to a central unit.

2. Transport system according to claim 1, **characterised in that** there are provided at least two tracks for the carrier vehicle at two levels one above the other, with corresponding satellite tracks extending transversely thereto, and a lift at at least one end of the tracks.

3. Transport system according to claim 1 or 2, **characterised in that** the at least one satellite vehicle is designed for the receipt, transport and storing of pallets.

4. Transport system according to one or more of the foregoing claims, **characterised in that** the energy is transmitted from the primary circuit to the carrier vehicle (2) and the satellite vehicles (3, 9) electromagnetically at medium frequency.

5. Transport system according to one or more of the foregoing claims, **characterised in that** the primary circuit is designed in each case as an elongated arrangement of conductors and is connected to the medium-frequency source and is arranged in each case longitudinally of the track (1) of the carrier vehicle (2) and longitudinally of the satellite tracks (7, 8), and **in that** there is provided on the carrier vehicle (2) and each of the satellite vehicles (3, 9) a ferrite-core transmitter head (15) and a secondary winding enclosing the ferrite core, which secondary winding is inductively coupled to the primary circuit.

## Revendications

1. Système de transport guidé par rails comportant. au moins un parcours qui est constitué d'éléments de guidage porteurs et d'éléments de guidage de rail et sur lequel est guidé au moins un véhicule de transport qui comporte des moyens pour se déplacer de manière autonome le long du parcours et auquel est transmis de l'énergie sans contact à partir d'un circuit primaire qui est disposé le long du parcours,
**caractérisé en ce que**
le véhicule de transport est réalisé sous la forme d'un véhicule support (2) pour au moins un véhicule satellite (3, 9) destiné au transport de marchandises et comporte une Section de parcours de satellite pour le positionnement et le stationnement du véhicule satellite (3, 9) ; **en ce que** la section de parcours du satellite peut être alignée avec affleurement, par le positionnement du véhicule support (2), sur des parcours de satellite (7, 8) qui sont disposés le long du parcours du véhicule support (2) transversalement à ce dernier parcours ; **en ce que** de l'énergie est transmise sans contact, à partir d'un circuit primaire qui est disposé le long du parcours de satellite (7, 8), au véhicule satellite (3, 9), qui est muni de moyens pour se déplacer de manière autonome, et **en ce qu'**au moins un des véhicules satellites (3, 9) et le véhicule support (2) comportent une capacité de processeur et des moyens pour la transmission sans fil d'informations entre eux et/ou avec une unité centrale.

2. Système de transport selon la revendication 1,
**caractérisé en ce qu'**il est prévu
au moins deux parcours pour le véhicule support (2) qui sont disposés l'un au dessus de l'autre dans deux plans et qui comportent des parcours de satellite (7, 8) correspondants qui s'étendent transversalement par rapport aux parcours (1) du véhicule support (2) et un élévateur à au moins une extrémité des parcours.

3. Système de transport selon la revendication 1 ou 2,
**caractérisé en ce que**
au moins un parcours de satellite (7, 8) est conçu pour la réception, le transport et la dépose de palettes.

4. Système de transport selon l'une ou plusieurs des revendications précédentes
**caractérisé en ce que**
l'énergie est transmise par voie électromagnétique à une moyenne fréquence du circuit primaire au véhicule support (2) et aux véhicules satellites (3, 9).

5. Système de transport selon l'une ou plusieurs des revendications précédentes
**caractérisé en ce que**
le circuit primaire est réalisé sous la forme d'un dispositif de conducteurs qui est disposé en longueur, qui est relié à la source à moyenne fréquence et qui est aussi disposé respectivement le long du parcours (1) du véhicule support (2) et le long des parcours de satellite (7, 8) ; **en ce qu'**il est prévu, sur le véhicule support (2) et sur les véhicules satellites (3, 9), respectivement une tête de transmission à noyau de ferrite (15) ainsi qu'un enroulement secondaire qui entoure le noyau de ferrite et est couplé de manière inductive avec le circuit primaire.
